# EUROPEAN PATENT APPLICATION

(11) **EP 4 838 853 A1**
(43) Date of publication of application: **11.11.2026**
(21) Application number: 25174246.6
(22) Date of filing: 05.05.2025
(51) Int. Cl.: H04L 41/0806, H04L 41/5051, H04L 41/5054, H04W 4/50, H04L 41/08

(54) **APPARATUS, METHOD, AND COMPUTER PROGRAM FOR DETERMINING ACTIONS TO BE PERFORMED BY A SERVICE PROVISIONING ENTITY**

(71) Applicant: Deutsche Telekom AG, 53113 Bonn (DE)
(72) Inventor: BLICKER, Stephan, 53343 Wachtberg (DE)
(74) Representative: 2SPL Patentanwälte PartG mbB

(57) **Abstract**

The present disclosure relates to an apparatus (10), a method, and a computer program for determining actions to be performed by a service provisioning entity (20) of a mobile communication system, and to a system comprising such an apparatus (10) and the service provisioning entity (20). The apparatus (10) comprises an interface (12) for communicating at least with the service provisioning entity (20), and processor circuitry (14) configured to obtain information on an intent of a user, the intent being related to the establishment or modification of a communication service of the mobile communication system, query at least one database (30) of contextual information to obtain contextual information related to the intent, process the intent and the contextual information to determine one or more actions to be performed by the service provisioning entity in order to establish or modify the communication service, and provide information on the one or more actions to be performed by the service provisioning entity to the service provisioning entity.

## Description

### Field

The present disclosure relates to an apparatus, a method, and a computer program for determining actions to be performed by a service provisioning entity of a mobile communication system, and to a system comprising such an apparatus and the service provisioning entity.

### Background

In a Radio Access Network (RAN) of a cellular mobile communication system, cellular services are set up through a series of coordinated processes involving multiple network elements. When a user equipment (UE) requests access, it communicates with the nearest base station, which allocates radio resources and establishes a secure connection. The base station connects to the core network to handle signaling and data transfer, authenticate the user, and manage mobility. Essential functions, such as handovers, resource management, and quality of service, are also handled to ensure continuous and reliable service.

In the future, subscribers may communicate with the network in a completely different way. Users might not want to dial or input cryptic parameters into the UE but simply tell the UE what they want to do, thereby creating a high-level intent/prompt. They then expect the UE to connect to the network and provide exactly the requested service. The network operator may need to ensure that all of those requests are provisioned, configured, executed, and terminated over the expected service lifecycle.

There may be a desire to provide a concept for performing service provisioning based on a high-level intent or prompt of a user of a mobile communication system.

### Summary

This desire is addressed by the subject matter of the independent claims.

Various examples of the present disclosure are based on the finding that, while a high-level intent provided by a user usually describes the core of the service desired by the user, it is often insufficient for deriving concrete actions to be performed for setting up or modifying a service. Therefore, the high-level intent is first used to query one or more databases for additional context that can be used, for example, by an agentic system and/or a language model, to derive the actions to be performed from the high-level intent and the context. This way, a mechanism is provided that is suitable for service provisioning based on the high-level intent of the user.

Some aspects of the present disclosure relate to an apparatus for determining actions to be performed by a service provisioning entity of a mobile communication system. The apparatus comprises an interface for communicating at least with the service provisioning entity. The apparatus comprises processor circuitry configured to obtain information on an intent of a user. The intent is related to the establishment or modification of a communication service of the mobile communication system. The processor circuitry is configured to query at least one database of contextual information to obtain contextual information related to the intent. The processor circuitry is configured to process the intent and the contextual information to determine one or more actions to be performed by the service provisioning entity in order to establish or modify the communication service. The processor circuitry is configured to provide information on the one or more actions to be performed by the service provisioning entity to the service provisioning entity. By querying the at least one database of contextual information, the additional context is obtained that is useful for deriving concrete actions from the high-level intent of the user. This way, a mechanism is provided that is suitable for service provisioning based on the high-level intent of the user.

In some examples, the intent and contextual information may suffice for determining the actions to be performed, for example, when using a language model that has been trained to output suitable actions based on the components and parameters of the mobile communication system at hand. In some other examples, an additional database may be queried, based on the intent and based on the context, for information on one or more components or parameters of the mobile communication system that are involved in providing the communication service to be established or modified. In other words, the processor circuitry may be configured to query, using the intent and the contextual information, a database of components and parameters of the mobile communication system for information on one or more components or parameters of the mobile communication system that are involved in providing the communication service. The processor circuitry may be configured to further process the information on the one or more components or parameters of the mobile communication system involved in providing the communication service to determine the one or more actions. Thus, using the intent and context, components and parameters of the mobile communication system that are relevant for the service to be established or modified can be retrieved from a corresponding database, and be used to formulate the actions to be performed by the service provisioning entity. This way, up-to-date information about the relevant components and parameters can be used to determine the action(s) to be performed, for example, without requiring costly training or re-training of a language model being used to output the actions to be performed.

There are various representations that can be used to represent the information on the one or more components or parameters, such as XML- (eXtensible Markup Language), YAML-(Yet Another Markup Language), or JSON (JavaScript Object Notation)-based representations. To better represent how the respective components and parameters interact with each other, a graph-based representation, based on the concept of knowledge graphs, may be used. In other words, the processor circuitry may be configured to query the database of components and parameters of the mobile communication system to obtain a knowledge graph representing the information on the one or more components or parameters of the mobile communication system involved in providing the communication service. The processor circuitry may be configured to process the intent, the contextual information, and the knowledge graph to determine the one or more actions. A knowledge graph offers several advantages over other representations, as knowledge graphs inherently capture relationships between entities, providing a more meaningful and interconnected data structure, which can enhance a downstream entity, such as the apparatus, understanding of context and associations. Further, knowledge graphs allow for efficient querying and semantic reasoning, enabling the downstream entity, to draw inferences and access information in a more logical manner. Lastly, knowledge graphs are highly flexible and extensible, accommodating the addition of new data and relationships without needing to overhaul the existing structure. This can facilitate continuous extension and updating of the relevant information to be used for determining the action(s) to be performed.

In some examples, it may be sufficient to query the database of components and parameters of the mobile communication system once and retrieve (all of) the relevant information. In some cases, however, the provided information may be insufficient for determining the action(s) to be performed. In this case, the query may be adapted to ensure that (all of) the relevant information can be retrieved. Thus, the processor circuitry may be configured to assess whether the information on the one or more components or parameters of the mobile communication system involved in providing the communication service matches the intent and the contextual information, and to revise or extend a query for querying the database of components and parameters of the mobile communication system based on the assessment. In particular, the processor circuitry may be configured to assess the information on the one or more components or parameters of the mobile communication system involved in providing the communication service using a language model that is capable of reasoning, and to revise or extend the query based on an output of the language model. This way, a higher-quality response can be obtained from the database of components and parameters of the mobile communication system, thereby improving the determination of the action(s) to be performed.

When operating a mobile communication system with hundreds of thousands or millions of users, it is likely that several users have the same needs. To speed up or facilitate the determination of the action(s) to be performed, a database of historical information can be queried for information on how similar intents have been dealt with in the past. For example, the processor circuitry may be configured to query, using the intent and the contextual information, a database of historical information that has been retrieved in connection with one or more previous intents to obtain historical information that is relevant to the intent and contextual information. The processor circuitry may be configured to further process the historical information to determine the one or more actions. This way, the determination of the one or more actions can be sped up and/or the determination of the action(s) to be performed may be improved, by reusing at least part of the effort that has been performed in the context of previous interactions.

In some examples, an agentic approach may be used to obtain the information used for determining the action(s) to be performed. Agentic approaches involve using software agents or algorithms designed to autonomously perform tasks or make decisions based on given parameters or high-level intents. When querying databases, agentic approaches offer the benefit of efficiently handling complex queries by automatically interpreting the user's intent and orchestrating the necessary processes, e.g., across different data sources. This can lead to time savings and the delivery of more accurate and relevant results, as the agent(s) can simultaneously access and process information from various databases in a cohesive manner. Thus, the processor circuitry may be configured to trigger at least one software agent to query at least one of the at least one database of contextual information, a database of components and parameters of the mobile communication system, or a database of historical information. This way, the agent(s) can retrieve and integrate the information that is relevant to the intent autonomously, providing and compiling the context for determining the one or more actions.

Another database that benefits from revising and improving the query for retrieving the respective information is the at least one database of contextual information. For example, the processor circuitry may be configured to assess whether the contextual information matches the intent, and to revise or extend a query for querying the at least one database based on the assessment. In particular, the processor circuitry may be configured to assess the contextual information using a language model capable of reasoning, and to revise the query based on an output of the language model. This way, a higher-quality response can be obtained from the at least one contextual database, thereby improving the determination of the action(s) to be performed.

In the proposed concept, the intent is processed to retrieve the relevant information from the respective databases. However, in many cases, the words included in the intent may be unsuitable for identifying all of the relevant information. Instead, their semantic meaning, in the context of establishing or modifying a service of the mobile communication system, may be used for querying the respective databases. Embeddings are numerical representations of data, capturing semantic meaning in a vector format. They can contain the context of an application domain, such as service establishment in a mobile communication system, by being trained on data specific to that domain. This training allows the embedding to represent relationships between these concepts. To query the databases, the intent (e.g., "I want to make a video call with my doctor in New York") can be encoded into a vector. This query vector can be compared to the embedding vectors stored alongside the database records using a similarity metric (like cosine similarity). Records with the most similar embedding vectors to the query vector may be returned as the most relevant results. Thus, the processor circuitry may be configured to generate one or more embeddings representing at least one of the intent or the contextual information, and to query at least one of the at least one database, a database of components and parameters of the mobile communication system, or a database of historical information using the one or more embeddings. This way, a more comprehensive set of relevant results can be obtained.

There are various types of contextual information that can be retrieved to obtain the contextual information. For example, the at least one database of contextual information may comprise at least one of a source marketplace of application programming interfaces of an operator of the mobile communication system, a source marketplace of application programming interfaces of a third-party provider, or a knowledge database of a third-party provider.

In many cases, a language model, such as a large language model (LLM), is a useful tool for reviewing the intent and the retrieved information and for deriving corresponding action(s) to be performed. Thus, the processor circuitry may be configured to process the intent and the contextual information using a language model, prompting the language model to generate information on the one or more actions based on the intent and the contextual information. In some cases, the processor circuitry may be configured to further process at least one of information on the one or more components or parameters of the mobile communication system involved in providing the communication service or historical information using the language model. This way, the action(s) can be derived from unstructured or semi-structured information, allowing inclusion of different types of information from a multitude of sources.

Another aspect of the present disclosure relates to a system comprising the apparatus and the service provisioning entity. For example, the service provisioning entity is configured to establish or modify a communication service based on the information on the one or more actions provided by the apparatus.

Another aspect of the present disclosure relates to a corresponding method for determining actions to be performed by a service provisioning entity of a mobile communication system. The method comprises obtaining information on an intent of a user, with the intent being related to the establishment or modification of a communication service of the mobile communication system. The method comprises querying at least one database of contextual information for contextual information related to the intent. The method comprises processing the intent and the contextual information to determine one or more actions to be performed by the service provisioning entity to establish or modify the communication service. The method comprises providing information on the one or more actions to be performed by the service provisioning entity to the service provisioning entity.

Another aspect of the present disclosure relates to a computer program having a program code for performing the above method, when the computer program is executed on a computer, a processor, or a programmable hardware component.

### Brief description of the Figures

Some examples of apparatuses and/or methods will be described in the following by way of example only, and with reference to the accompanying figures, in which:
- Fig. 1a: shows a schematic diagram of an example of an apparatus for determining actions to be performed by a service provisioning entity of a mobile communication system;
- Fig. 1b: shows a flow chart of an example of a method for determining actions to be performed by a service provisioning entity of a mobile communication system;
- Fig. 2: shows a schematic diagram illustrating the creation of a subscriber level service;
- Fig. 3: shows a schematic diagram illustrating a knowledge agent and key operator assets; and
- Figs. 4a to 4d: show examples of knowledge graphs representing components and parameters of a mobile communication system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

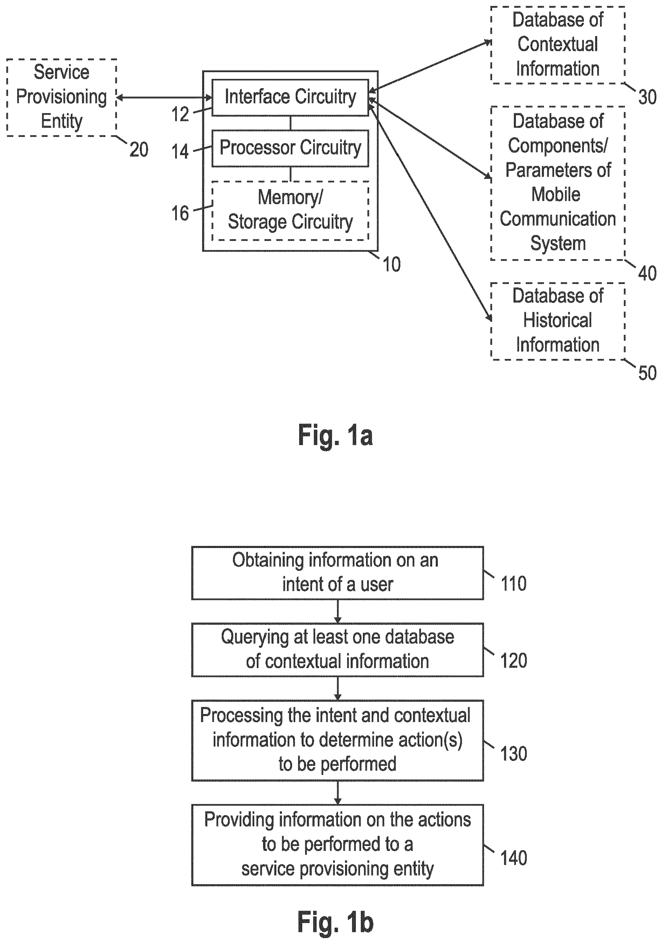

Fig. 1a shows a schematic diagram of an example of an apparatus 10 for determining actions to be performed by a service provisioning entity 20 of a (cellular) mobile communication system, e.g., a cellular communication system being based on a telecommunication standard defined by the 3^{rd}-Generation Partnership Project (3GPP). The apparatus 10 comprises at least one interface 12 (e.g., interface circuitry 12) and processor circuitry 14. Optionally, the apparatus further comprises memory/storage circuitry 16. The processor circuitry 14 is coupled with the at least one interface 12 and the optional memory/storage circuitry 16. In general, the functionality of the apparatus 10 may be provided by the processor circuitry 14, in conjunction with the at least one interface 12 (for exchanging data/information with one or more other entities, such as the service provisioning entity 20, at least one database 30 of contextual information, at least one database 40 of components and parameters of the mobile communication system, at least one database 50 of historical information, and/or a language model) and/or the memory/storage circuitry 16 (for storing information, such as machine-readable instructions, a language model, or the database of historical information). In general, the functionality of the processing circuitry may be implemented by the processor circuitry 14 executing machine-readable instructions. Accordingly, any feature ascribed to the processor circuitry 14 may be defined by one or more instructions of a plurality of machine-readable instructions. The apparatus 10 may comprise the machine-readable instructions. The processor circuitry 14 may be configured to perform the method of Fig. 1b.

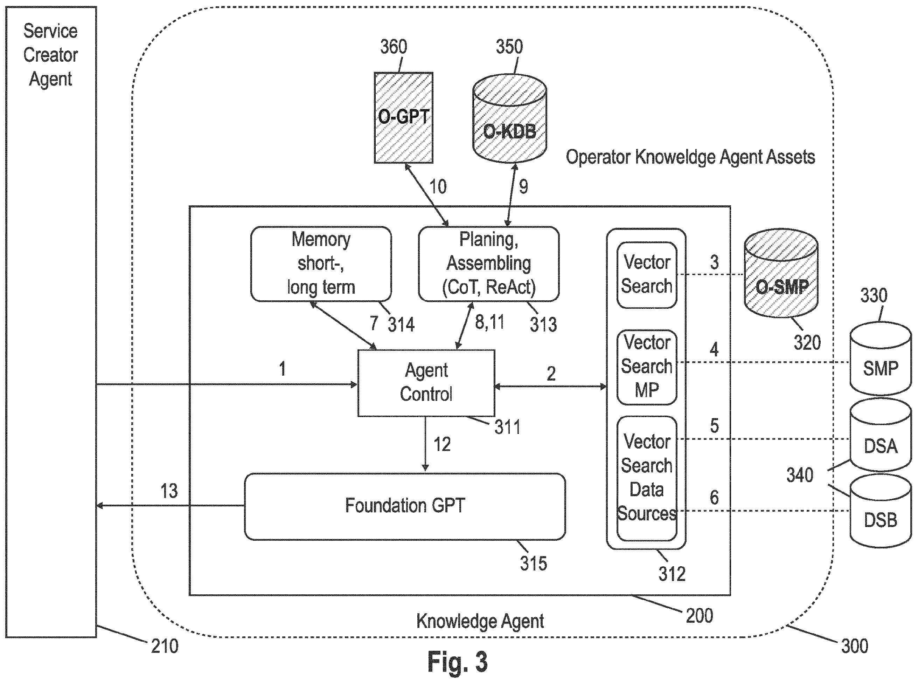

In particular, the processor circuitry 14 is configured to obtain information on an intent of a user, with the intent being related to the establishment or modification of a communication service of the mobile communication system. The processor circuitry 14 is configured to query at least one database 30 of contextual information (see also databases 320, 330, 340 in Fig. 3) to obtain contextual information related to the intent. The processor circuitry 14 is configured to process the intent and the contextual information to determine one or more actions to be performed by the service provisioning entity 20 in order to establish or modify the communication service. The processor circuitry 14 is configured to provide information on the one or more actions to be performed by the service provisioning entity to the service provisioning entity 20.

Fig. 1a further shows a system comprising the apparatus 10 and the service provisioning entity 20. For example, the service provisioning entity 20 may be configured to establish or modify a communication service based on the information on the one or more actions provided by the apparatus 10.

Fig. 1b shows a flow chart of an example of a corresponding method for determining actions to be performed by the service provisioning entity of the mobile communication system. The method comprises obtaining 110 the information on the intent of the user. The method comprises querying 120 the at least one database of contextual information for the contextual information related to the intent. The method comprises processing 130 the intent and the contextual information to determine the one or more actions to be performed by the service provisioning entity to establish or modify the communication service. The method comprises providing 140 the information on the one or more actions to be performed by the service provisioning entity to the service provisioning entity.

In the following, the features of the apparatus 10 of Fig. 1a, the method of Fig. 1b, and a corresponding computer program will be discussed in more detail with respect to the apparatus 10 of Fig. 1a. Features introduced in connection with the apparatus 10 of Fig. 1a may likewise be included in the corresponding method and computer program.

The present disclosure relates to the establishment or modification of a communication service in a mobile communication system based on an intent of a user. In a cellular mobile communication system, a communication service refers to the functionality provided to enable data transfer between users or devices. This involves setting up bearers or tunnels, which are pathways that facilitate the transmission of data by ensuring the correct quality of service parameters such as bandwidth, latency, and reliability. These bearers or tunnels are established to carry specific types of data, such as voice calls, video, or internet traffic, ensuring efficient and seamless communication. In the proposed concept, such communication services are set up (or modified, if an existing communication service can be reused with modifications) based on the intent of the user. In this context, an intent is a natural-language prompt representing a communication that the user wants to perform. For example, the communication may be any kind of communication, such as data communication, voice communication, video communication, or virtual reality communication. For example, "I want to stream a high-definition video from platform X" may be an intent, as well as "I want to meet my coworkers in the metaverse" or "I want to take part in remote surgery at hospital Z." In the intent, the user describes what he or she wants to do (involving the mobile communication system). The goal is to identify the underlying communication service that is to be set up or modified in order to enable the user to do what he or she wants.

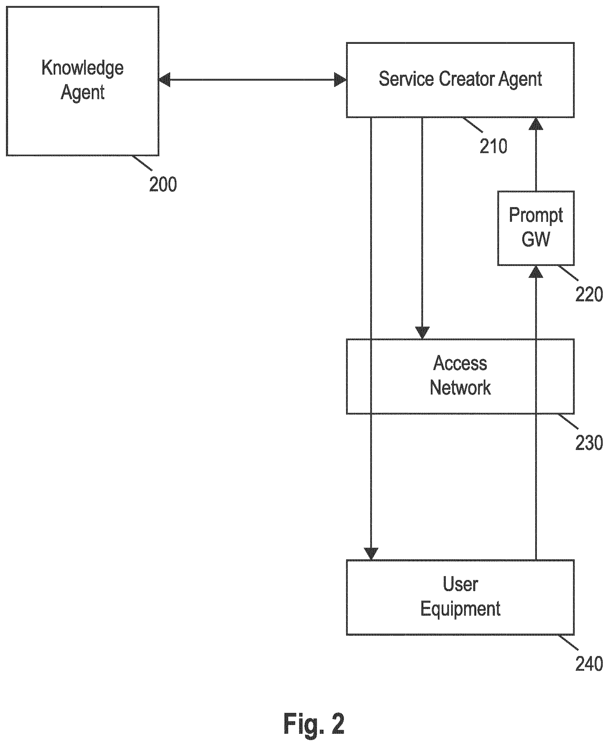

The proposed concept starts with the intent (or "prompt") of the user, which is received from a user equipment of the user. Thus, the communication service involves the user equipment (or rather a user equipment) of the user as well as the mobile communication system. In some examples, the apparatus 10 may obtain the intent directly or indirectly from the user's user equipment. For example, in the example of Figs. 2 and 3, the apparatus 10 (denoted knowledge agent 200 in Figs. 2a and 3) receives the intent from the user equipment 240 via a prompt gateway 220 and via the service provisioning entity (denoted service creator agent 210 in Figs. 2 and 3). The output of the apparatus 10 (knowledge agent 200) is likewise provided to the service provisioning entity 20 (service creator agent 210), which uses the output of the apparatus 10 (knowledge agent 200) to set up or modify the communication service. For example, the service provisioning entity 20 (service creator agent 210) may be configured to instruct the radio access network (access network 230) and the user equipment (user equipment 240) to set up or modify the communication service, e.g., by setting up bearers/tunnels suitable for the communication service according to the action(s) provided by the apparatus 10 (knowledge agent 200).

The apparatus 10 (knowledge agent 200) processes the intent and determines the actions to be performed by the service provisioning entity 20 (service creator agent 210) based on the intent. For this purpose, an agentic approach may be taken. In other words, the processor circuitry 14 may be configured to trigger software agents to query the respective databases (the at least one database 30 of contextual information, a database 40 of components and parameters of the mobile communication system, and/or a database 50 of historical information) and determine the actions to be performed.

In the following, an example workflow of such an agentic course of action is provided.

The processor circuitry 14 starts by receiving the intent, which outlines the communication that the user wants to perform. An agent control system (agent control 311 in Fig. 3) is provided/executed by the processor circuitry 14, with the agent control system being used to control the respective agents.

A first software agent (context agent, denoted by 312 in Fig. 3) is used to query the contextual information. This agent queries the at least one database of contextual information to retrieve the relevant contextual data based on the provided intent. In this context, the contextual information is any information that may (or may not) be relevant to the intent. Different databases may be queried based on the intent, such as knowledge databases of third-party providers (DSA, DSB 340 in Fig. 3), a source marketplace of a third-party provider (SMP 330), and/or a source marketplace of the mobile communication system (O-SMP 320). For example, the third-party knowledge databases may include a directory of phone numbers (e.g., of people and/or businesses), a geolocation database, and/or a directory of businesses. The respective source marketplaces (320, 330) are platforms that connect API providers with users who need to integrate these APIs into their applications or services. These marketplaces provide a centralized location where developers can publish (and optionally monetize) their APIs, e.g., by offering them on a subscription-based or pay-per-use model. Users of the marketplace can obtain a wide range of available APIs, which cover various functionalities like data retrieval, machine learning, analytics, and more. When a source marketplace is queried by the context agent, a two-step process is used, which includes a) obtaining, from the source marketplace, information on one or more APIs that are relevant to the intent, and b) querying the one or more APIs using the intent.

The resulting contextual information is then combined with the initial intent (e.g., by the agent control system). This enriched intent (intent + context) serves as the basis for determining the actions to be performed. To further improve the results, additional databases may be queried for additional information that is relevant to the intent. Thus, the enriched intent is used to query the subsequent databases.

For example, a second agent (historical agent) may be used to query a database 50 of historical information (i.e., information that has been retrieved from the different databases in connection with one or more previous intents) for historical information that is relevant to the intent and contextual information. In other words, the processor circuitry 14 may be configured to query, using the intent and the contextual information, the database 50 of historical information. This historical information may be further processed to determine the one or more actions. For example, the database of historical information may be queried for past records that may inform the determination of the one or more actions or highlight any recurring issues relevant to similar intents and contexts. In this context, historical information is information that has been collected as part of determining actions for the one or more previous intents.

A third agent (components agent) may be used to query a database of components and parameters of the mobile communication system (O-KDB 350 in Fig. 3). The database of components and parameters of the mobile communication system comprises information on the components of the mobile communication system, e.g., entities of the radio access network and/or core network of the mobile communication system, that are involved in setting up (and modifying) communication services. Accordingly, the processor circuitry 14 (e.g., using the components agent) may be configured to query, using the intent and the contextual information (and, optionally, the historical information), the database 40 of components and parameters of the mobile communication system for information on one or more components or parameters of the mobile communication system that are involved in providing the communication service. The information on the one or more components or parameters of the mobile communication system involved in providing the communication service may also be processed to determine the one or more actions. For example, for a given query (representing the intent as well as the contextual information, and optionally historical information), the database 40 of components and parameters of the mobile communication system outputs the components that are affected by the communication service, as well as parameters that can be used for setting up/modifying the communication service. This information may be used to determine the action(s) to be performed for setting up/modifying the communication service.

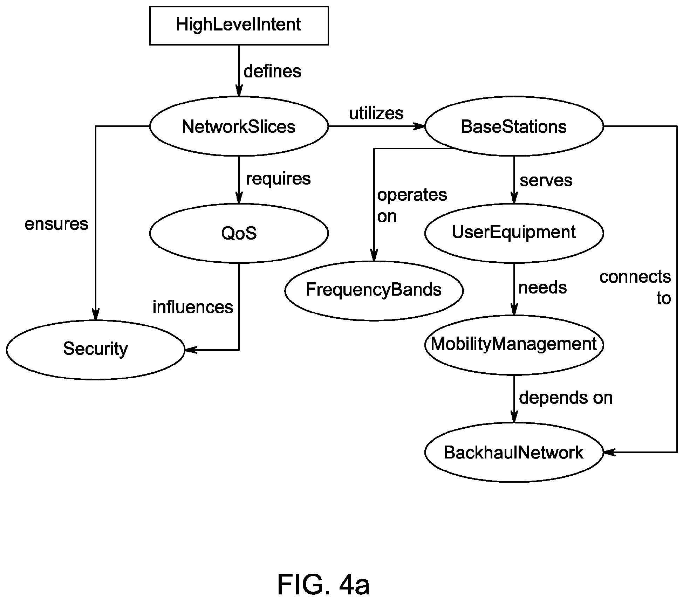

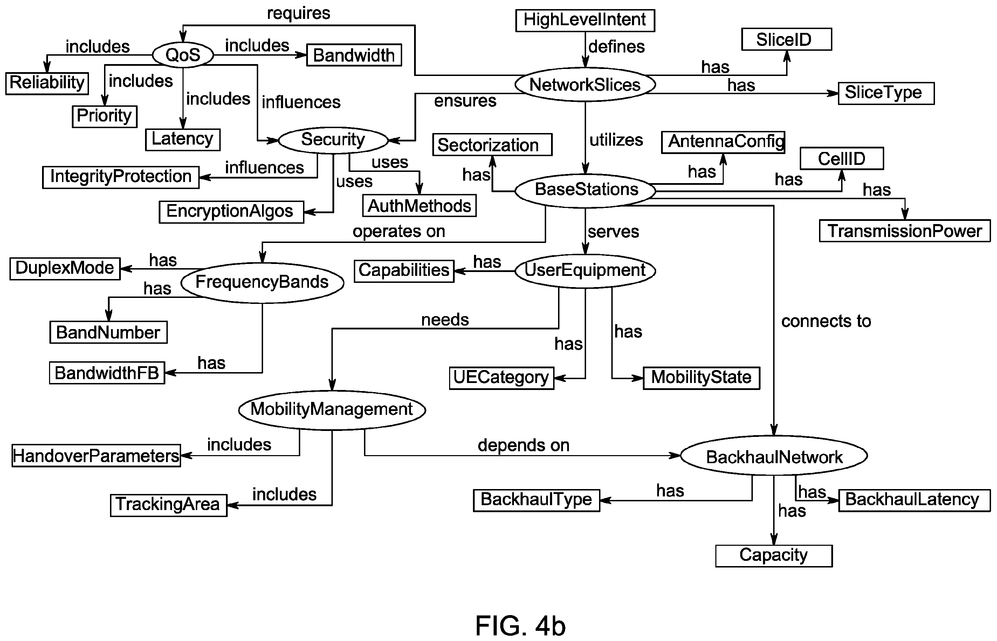

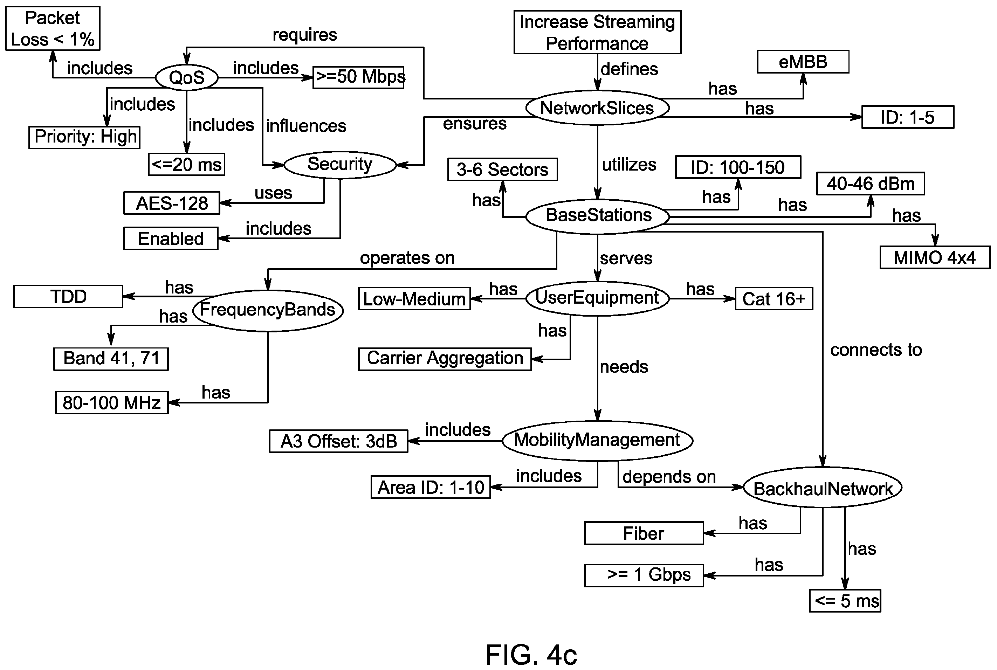

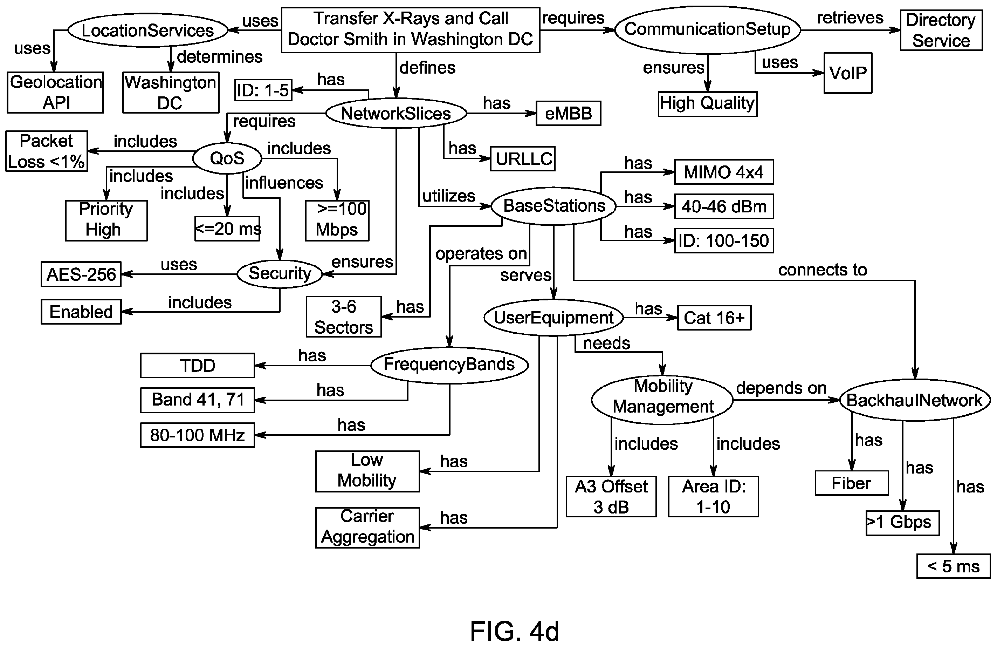

In some examples, the database 40 of components and parameters of the mobile communication system stores (and provides) the information on the one or more components or parameters of the mobile communication system involved in providing the communication service as a knowledge graph. Thus, the processor circuitry 14 (e.g., the components agent) may be configured to query the database of components and parameters of the mobile communication system to obtain a knowledge graph representing the information on the one or more components or parameters of the mobile communication system involved in providing the communication service, which can then be used to determine the one or more actions. Examples of such knowledge graphs are provided in connection with Figs. 4a to 4d. For example, as shown in Figs. 4b, 4c and 4d, the knowledge graph includes both the components of the mobile communication system (network slices, base stations, user equipment) as well as the parameters (QoS reliability, priority, latency, bandwidth, security integrity protection and encryption algorithm, UE capabilities and mobility state, backhaul network type, capacity and latency, cell IDs, cell transmission power, etc.).

In some examples, the initial queries may not include all of the relevant information, or the information provided may be irrelevant to the intent. Therefore, the queries may be refined to improve the quality of the obtained information. For example, a fourth agent (planning and assembling agent) may assess the information gathered, and refine the respective queries. For example, the processor circuitry 14 (e.g., the planning and assembling agent) may be configured to assess whether the information on the one or more components or parameters of the mobile communication system involved in providing the communication service matches the intent and the contextual information, and to revise or extend a query for querying the database of components and parameters of the mobile communication system based on the assessment. Similarly, the processor circuitry 14 (e.g., the planning and assembling agent) may be configured to assess whether the contextual information matches the intent, and to revise or extend a query for querying the at least one database based on the assessment. In particular, a language model (e.g., LLM), and in particular a reasoning model, i.e., a language model capable of reasoning (e.g., O-GPT 360 in Fig. 3), may be used to assess the respective information and revise the queries. In other words, the processor circuitry 14 (e.g., the planning and assembling agent) may be configured to assess the information on the one or more components or parameters of the mobile communication system involved in providing the communication service using a language model capable of reasoning, and to revise or extend the query based on an output of the language model. Similarly, the processor circuitry 14 (e.g., the planning and assembling agent) may be configured to assess the contextual information using a language model capable of reasoning, and to revise the query based on an output of the language model.

In general, instead of, or in addition to, using the literal version of the intent (and contextual information) to query the respective databases, their semantic meaning may be used. In particular, embeddings may be generated that represent the intent (and contextual information/historical information). In other words, the processor circuitry, e.g., the respective agent, may be configured to generate one or more embeddings representing at least one of the intent, the contextual information, or the historical information, and to query at least one of the at least one database 30 of contextual information, the database 40 of components and parameters of the mobile communication system, or the database 50 of historical information using the one or more embeddings.

The planning and assembling agent may gather results from all three agents - contextual information, components/parameters, and historical information. These results are synthesized to form a comprehensive understanding of the current requirements for setting up the communication service. Based on the synthesized information, the processor circuitry 14 defines specific actions that need to be performed to set up the communication service. In particular, a language model (foundation GPT 315 in Fig. 3) may be used for formulating the actions based on the contextual information, components/parameters and historical information. In other words, the processor circuitry may be configured to process the intent, the contextual information, and optionally the historical information and/or the information on the one or more components or parameters of the mobile communication system involved in providing the communication service using a language model (e.g., an LLM), by prompting the language model to generate the information on the one or more actions based on the intent, the contextual information, the historical information and/or the information on the one or more components or parameters of the mobile communication system involved in providing the communication service. The information on the one or more actions is then provided to the service provisioning entity 20.

The at least one interface 12 may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information.

The processor circuitry 14 may be implemented using one or more processing units, one or more processing devices, any means for processing, such as a processor, a computer or a programmable hardware component being operable with accordingly adapted software. In other words, the described function of the processor circuitry 14 may as well be implemented in software, which is then executed on one or more programmable hardware components. Such hardware components may comprise a general purpose processor, a Digital Signal Processor (DSP), a micro-controller, etc.

For example, the memory or storage circuitry 16 may be or comprise a volatile memory, such as random access memory, for instance, dynamic random-access memory (DRAM), and/or may comprise at least one element of the group of a computer-readable storage medium, such as a magnetic or optical storage medium, for example, a hard disk drive, a flash memory, a floppy disk, random access memory (RAM), such as static random access memory of an FPGA, block random access memory of an FPGA, distributed random access memory of an FPGA, programmable read-only memory (PROM), erasable programmable read-only memory (EPROM), an electronically erasable programmable read-only memory (EEPROM), or a network storage.

More details and aspects of the apparatus 10, service provisioning entity 20, method, and computer program are mentioned in connection with the proposed concept or one or more examples described above or below (e.g., Fig. 2 to 4d). The apparatus 10, service provisioning entity 20, method, and computer program may comprise one or more additional optional features corresponding to one or more aspects of the proposed concept or one or more examples described above or below.

Various examples of the present disclosure relate to operator service creation with knowledge, and in particular to a knowledge agent-based method for operator service creation based on subscriber intent.

Agentic Al (Artificial Intelligence) is gaining momentum in the telecom industry. The proposed concept uses agentic Al-enabling technology for the proper planning and assembly of telecommunication system tasks (actions) based on the knowledge of the telecommunication networks. The proposed concept provides a knowledge agent that has a special focus on operator assets (O-GPT (Generative Pre-trained Transformer model that is specific to the operator O), O-KDB (Operator Knowledge Database), O-SMP (Operator Source Market Place); please refer to Figure 2). In the proposed concept, O-GPT, O-KDB, and O-SMP (O=Operator) are used to support telco agents with knowledge and context generation.

In the proposed concept, a service creator agent (e.g., the service provisioning entity 20 discussed in connection with Figs. 1a and 1b) consumes the knowledge offered by the knowledge agent (e.g., the apparatus 10 discussed in connection with Figs. 1a and 1b). The knowledge agent can be orchestrated into the operator network in a centralized or distributed manner and is responsible for the translation of intent into meaningful planning and assembly tasks (actions) that are provided to the service creator agent (with the internal architecture of the service creator agent being out of scope of the present disclosure). The service creator agent is assumed to be the consuming agent for knowledge-based responses to the prompt of the subscriber (i.e., intent).

Fig. 2 shows a schematic diagram illustrating the creation of a subscriber-level service. Fig. 2 shows the very high-level flow for service creation. The user uses the user equipment (UE) 240 to provide an intent related to the establishment or modification of a service, which is received by the Prompt GW (gateway) 220. A service creator agent performs/executes the actions required for establishing or modifying the service at the access network 230 or the user equipment 240. The knowledge agent 200, which may correspond to or be used to implement the apparatus 10 of Fig. 1a, may come into play to plan and assemble the actions to be performed.

Fig. 3 shows a schematic diagram illustrating a knowledge agent 200 and key operator assets. Fig. 3 now depicts a more detailed view of the knowledge agent 200, which is the focus of the proposed concept. A key task of the knowledge agent is to provide the service creator agent with very detailed information about how to create or modify the service based on the prompted intent.

The knowledge agent 200 is part of the operator network (e.g., the core network) 300, together with the operator knowledge agent assets O-SMP (Operator Source Marketplace) 320, O-KDB (Operator Knowledge Database) 350, which may correspond to the database of components and parameters of the mobile communication system 40, and O-GPT (Operator Generative Pre-Trained Transformer model) 360, which may correspond to the language model capable of reasoning discussed in connection with Figs. 1a and 1b.

The knowledge agent 200 comprises an agent control component 311. The agent control component 311 is coupled with a database retrieval component 312, which comprises a vector search block for querying the O-SMP 320, a vector search marketplace block for querying a third-party source marketplace 330, and a vector search data sources block for querying first and second third-party data sources 340 (DSA, DSB). The database retrieval component 312 is used to retrieve context information based on the intent of the user.

The agent control component 311 is further coupled with a planning and assembly block 313, which uses techniques such as Chain of Thought (CoT), Reasoning, Acting (ReAct), or Tree of Thought (ToT) to query the O-KDB 350, e.g., using O-GPT 360 for the reasoning process. The agent control component 311 is further coupled with a memory 314, such as short-term or long-term memory.

The agent control component provides the assembled information (intent, context, historical information, information on network components and parameters) to another language model (foundation GPT 315) that is used to determine and output the action(s) to be performed, in a format that can be processed by the service creator agent.

In the following, an example flow involving the knowledge agent 200 is discussed. As shown in Fig. 3, the knowledge agent 200 is interrogated (1) by the service creation agent 210. The agent control component 311 is responsible for processing and enriching the incoming prompt (intent) with detailed information and additional meaningful context and knowledge. It interrogates internal and external data sources (2) and source marketplaces (SMP). External marketplaces 330 (either openly accessible or paid), such as RapidAPl.com, Google, or AWS datasets, are queried (4), depending on the business model, agent configuration, and the user's prompt (intent). If the operator operates a marketplace 320 of vector stores that can be selected on purpose, the prompt can be enriched with operator-specific context. This component may be a logical database, which can be located in a different operator domain (DB (database) system for RAN (Radio Access Network), Core, management vectors).

Furthermore, third-party data sources (DSA, DSB 340) may be queried (5, 6). After interrogation of the vector store datasets (internal/external (2-6)), the agent control component 311 may add historic data (from a short- or long-term memory 314) to the enriched information (7).

The operator knowledge database 350 may be interrogated subsequently (9) to provide (all) network-related dependencies related to the enriched prompt (i.e., the information on the one or more components or parameters of the mobile communication system). It is up to the operator, to whose domain the database belongs, to structure the knowledge trees in a domain-specific manner. For example, standardization bodies may specify the logical structure/data model of the knowledge database 350 and the embedding into the appropriate standard groups. After further enrichment of the intent prompt with internal and external knowledge, the operator GPT 360 may be interrogated (10) to assemble the knowledge and context into actions (e.g., steps) to be executed by the service creator agent. In some examples, the agent control may decide to repeat at least some of operations 2-11 as part of a CoT (Chain of Thought) or Re-Act (Reasoning, Acting) pattern to provide the best prompt answer for planning and assembling. In some examples, human feedback can be retrieved during the (2)-(11) loop to fine-tune the process (e.g., during checking in the integration phase of a project). Once the assembled information is ready for responding to the service creator client, a foundation model 315 (i.e., a model without specific telecom knowledge) may be queried (12) to generate an output of the service creator agent 210, and the planning and assembly may be forwarded (13) to the service creator agent for performing the actions towards the network.

The knowledge agent box is the focus of the proposed concept, with special focus on the use of operator knowledge stores and marketplaces (O-KDB, (O-) SMP). These components may be specified and placed as a box (e.g., self-contained component) in appropriate standardization bodies. Moreover, the telecom-specific LLM may be specified and provided as a box (e.g., self-contained component). The interfaces (3), (9), and (10) may be considered as well, at least on the transport level. For the operator-specific knowledge database O-KDB, a flexible and domain-specific logical schema may be used.

In the following, some examples of knowledge graphs that could be output by the O-KDB 350 are provided. Figs. 4a to 4d show examples of knowledge graphs representing components and parameters of a mobile communication system.

In a first example, a user wants to increase the streaming performance. The network operator may create a knowledge graph for this service, taking into account the relevant network nodes (not all of which are mentioned here, as the focus is on the Radio Access Network (RAN) only). It is noted that knowledge graphs can be defined per technology unit and put together overall.

Fig. 4a shows a basic knowledge graph that is based on a high-level intent. The high-level intent defines network slices. The network slices ensure a certain level of security and require a Quality of Service (QoS) that influences the security. The network slices utilize base stations. The base stations connect to a backhaul network, operate on frequency bands, and serve user equipment (i.e., the user equipment of the user). The user equipment needs mobility management, which depends on the backhaul network. These dependencies are represented by the knowledge graph of Fig. 4a.

Fig. 4b shows a more detailed basic knowledge graph based on the high-level intent. Again, the high-level intent defines network slices. The network slices have a slice type and a slice ID. The network slices ensure a certain level of security, and require a Quality of Service (QoS) that influences the security. The QoS includes, as aspects/parameters, reliability, priority, latency and bandwidth. The security includes integrity protection, uses encryption algorithms, and uses authentication methods. The network slices utilize one or more base stations. The base stations have a sectorization. The base stations operate on frequency bands, with each frequency band having a duplex mode, a band number, and a bandwidth of the frequency band. The base stations have cell IDs, a transmission power, and an antenna configuration. The base stations connect to a backhaul network, which has a backhaul type, a capacity and a backhaul latency. The base stations serve user equipment (i.e., the user equipment of the user). It has capabilities, needs mobility management (the mobility management including handover parameters and tracking area), with the mobility management depending on the backhaul network. The user equipment has a UE category and a mobility state.

An example of the actual parameters and components included in the knowledge graph is shown in Fig. 4c. Fig. 4c shows a knowledge graph of RAN components for the intent "increase streaming performance". The intent "increase streaming performance" defines network slices. The network slices have a slice type (eMBB, enhanced Mobile Broadband) and slice IDs (1-5). The network slices ensure a certain level of security, and require of a Quality of Service (QoS) that influences the security. The QoS includes, as aspects/parameters, reliability (packet loss < 1%), priority (high), latency (< 20ms) and bandwidth (> 50 Mbps). The security uses an encryption algorithm (AES-128) and includes integrity protection. The network slices utilize one or more base stations. The base stations have a sectorization of 3 to 6 sectors. The base stations operate on frequency bands, with each frequency band having a duplex mode (Time-Division Duplex), a band number (bands 41, 71), and a bandwidth of the frequency band (80-100 MHz). The base stations have cell IDs 100-150, have a transmission power of 40-46 dBm, and support MIMO (Multiple Input Multiple Output) 4x4. The base stations connect to a backhaul network, which has a backhaul type (fiber-optic communication), a capacity (>1 Gbps) and a backhaul latency (< 5ms). The base stations serve a user equipment (i.e., the user equipment of the user). The user equipment has capabilities (carrier aggregation, Cat 16+), needs mobility management (using A3 Offset: 3dB as handover parameters and Area ID: 1-10 as tracking area), with the mobility management depending on the backhaul network. The user equipment has a UE category and a mobility state (low-medium). The knowledge graph may also include metrics for monitoring (which are out of scope for the proposed concept). It is noted that, in the knowledge graph of Fig. 4c, only RAN components are considered.

Figs. 4d relates to a second example. Fig. 4d shows a knowledge graph for a more sophisticated service that is based on the more complex intent "Transfer X-Rays and call Doctor Smith in Washington DC," resulting in provisioning and high-quality connection establishment, with the knowledge graph including the network configuration.

The high-level intent "Transfer X-Rays and call Doctor Smith in Washington DC" uses location services, which in turn use a geolocation API, to determine location services for Washington DC. The high-level intent requires a communication setup, ensuring high quality communication, using Voice over Internet Protocol (VoIP) technology, and retrieving a directory service. The high-level intent defines network slices having slice IDs 1-5, having a slice type of eMBB, and supporting Ultra-Reliable Low-Latency Communication (URLLC) communication. The network slices require a QoS having a packet loss of < 1% (reliability), high priority, < 20 ms latency, and > 100 Mbps bandwidth. The network slices ensure security (influenced by the QoS), using AES-256 as encryption algorithm and including integrity protection. The network slices utilize base stations having 3-6 sectors. The base stations operate on frequency bands having TDD (Time-Division Duplex) as duplex mode, bands 41 and 71 as band numbers and 80-100 MHz as frequency band bandwidth. The base stations have IDs 100-150, have a transmission power of 40-46 dBm, and support MIMO (Multiple Input Multiple Output) 4x4. The base stations serve a user equipment (the UE of the user providing the intent) having low mobility as mobility state, supporting carrier aggregation and Cat 16+, and needing mobility management (using A3 Offset: 3dB as handover parameters and Area ID: 1-10 as tracking area). The base stations use, and the mobility management depends on, a backhaul network having fiber as backhaul type, > 1 Gbps as capacity and < 5 ms as latency.

The service creator agent can undertake the relevant configurations and then initiate call establishment using available connection APIs.

In the following, the example of Fig. 4d is further discussed with reference to Fig. 3. The service creator agent 210 provides (1) the service creation prompt/high-level intent "Transfer X-Rays and Call Doctor Smith in Washington DC" to agent control 311. The agent control performs (2) context enrichment using external data sources, by retrieving Dr. Smith from the Washington DC phone book and obtaining the opening hours and address of Dr. Smith. At (3) to (6), the required information may be obtained. Agents may handle and evaluate collisions, for example, if multiple Dr. Smiths are found or opening hours are in conflict. The collisions may be clarified via the service creation agent with the user intent. Collisions are not in scope of the present examples but may occur. The knowledge agent may address collisions in its response to the service creation agent. At (7), using similar requests in the past, collisions might be resolved. For example, if the user has addressed Mr. Smith via intent in the past, some collisions may become obsolete by checking (all) past prompts. At (8)-(11), the knowledge agent utilizes O-GPT + O-KDB in order to plan and assemble the service creation tasks. The tasks may be queried. O-GPT may obtain the intent enriched with the information from (3)-(6) and conduct a high-level division into tasks by interrogating the O-KDB. For example, it may obtain location, network slice, and IMS (Internet Protocol Multimedia Subsystem) call separation tasks. These operations may be repeated via a ToT (Tree of Thought) mechanism, where answers are again utilized by the agent control to query more detailed answers per first separation block. Intelligent separation algorithms may be used. The enriched prompt and information from the O-KDB may be provided to the GPT 315, which may provide a detailed answer (which may include one or more scripts, code, documentation, etc.) to the service creation agent in order to execute the service end-to-end and to inform the original creator of the intent.

More details and aspects of the knowledge agent are mentioned in connection with the proposed concept or one or more examples described above or below (e.g., Fig. 1a to 1b). The knowledge agent may comprise one or more additional optional features corresponding to one or more aspects of the proposed concept or one or more examples described above or below.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10, 310) for determining actions to be performed by a service provisioning entity (20, 210) of a mobile communication system, the apparatus comprising:
an interface (12) for communicating at least with the service provisioning entity (20, 210); and
processor circuitry (14) configured to:
obtain information on an intent of a user, the intent being related to the establishment or modification of a communication service of the mobile communication system;
query at least one database (30, 320, 330, 340) of contextual information to obtain contextual information related to the intent;
process the intent and the contextual information to determine one or more actions to be performed by the service provisioning entity in order to establish or modify the communication service; and
provide information on the one or more actions to be performed by the service provisioning entity to the service provisioning entity.

2. The apparatus according to claim 1, wherein the processor circuitry is configured to query, using the intent and the contextual information, a database (40, 350) of components and parameters of the mobile communication system for information on one or more components or parameters of the mobile communication system that are involved in providing the communication service, and to further process the information on the one or more components or parameters of the mobile communication system involved in providing the communication service to determine the one or more actions.

3. The apparatus according to claim 2, wherein the processor circuitry is configured to query the database of components and parameters of the mobile communication system to obtain a knowledge graph representing the information on the one or more components or parameters of the mobile communication system involved in providing the communication service and to process the intent, the contextual information, and the knowledge graph to determine the one or more actions.

4. The apparatus according to one of claims 2 or 3, wherein the processor circuitry is configured to assess whether the information on the one or more components or parameters of the mobile communication system involved in providing the communication service matches the intent and the contextual information, and to revise or extend a query for querying the database of components and parameters of the mobile communication system based on the assessment.

5. The apparatus according to claim 4, wherein the processor circuitry is configured to assess the information on the one or more components or parameters of the mobile communication system involved in providing the communication service using a language model (360) that is capable of reasoning, and to revise or extend the query based on an output of the language model.

6. The apparatus according to one of claims 1 or 5, wherein the processor circuitry is configured to query, using the intent and the contextual information, a database (50, 314) of historical information that has been retrieved in connection with one or more previous intents to obtain historical information that is relevant for the intent and contextual information, and to further process the historical information to determine the one or more actions.

7. The apparatus according to one of claims 1 to 6, wherein the processor circuitry is configured to trigger at least one software agent (311) to query at least one of the at least one database (30, 320, 330, 340) of contextual information, a database (40, 350) of components and parameters of the mobile communication system, or a database (50, 314) of historical information.

8. The apparatus according to one of claims 1 to 7, wherein the processor circuitry is configured to assess whether the contextual information matches the intent, and to revise or extend a query for querying the at least one database based on the assessment.

9. The apparatus according to claim 8, wherein the processor circuitry is configured to assess the contextual information using a language model (360) capable of reasoning, and to revise the query based on an output of the language model.

10. The apparatus according to one of claims 1 to 9, wherein the processor circuitry is configured to generate one or more embeddings representing at least one of the intent or the contextual information, and to query at least one of the at least one database (30, 320, 330, 340), a database (40, 350) of components and parameters of the mobile communication system, or a database (50, 314) of historical information using the one or more embeddings.

11. The apparatus according to one of claims 1 to 10, wherein the at least one database of contextual information comprises at least one of a source marketplace (320) of application programming interfaces of an operator of the mobile communication system, a source marketplace (330) of application programming interfaces of a third-party provider, or a knowledge database (340) of a third-party provider.

12. The apparatus according to one of claims 1 to 11, wherein the processor circuitry is configured to process the intent and the contextual information using a language model (315), prompting the language model to generate the information on the one or more actions based on the intent and the contextual information.

13. A system comprising the apparatus (10, 310) according to one of claims 1 to 12 and a service provisioning entity (20, 210), wherein the service provisioning entity is configured to establish or modify a communication service based on the information on the one or more actions provided by the apparatus.

14. A method for determining actions to be performed by a service provisioning entity of a mobile communication system, the method comprising:
obtaining (110) information on an intent of a user, with the intent being related to the establishment or modification of a communication service of the mobile communication system;
querying (120) at least one database of contextual information for contextual information related to the intent;
processing (130) the intent and the contextual information to determine one or more actions to be performed by the service provisioning entity to establish or modify the communication service; and
providing (140) information on the one or more actions to be performed by the service provisioning entity to the service provisioning entity.

15. A computer program having a program code for performing the method of claim 14, when the computer program is executed on a computer, a processor, or a programmable hardware component.
